# EUROPEAN PATENT APPLICATION

(11) **EP 4 556 190 A1**
(43) Date of publication of application: **21.05.2025**
(21) Application number: 24212154.9
(22) Date of filing: 11.11.2024
(51) Int. Cl.: B28D 1/22, B28D 7/00, B23K 37/02, B23D 45/12

(54) **A PIPE CUTTING ASSEMBLY AND METHOD OF USE THEREOF**

(30) Priority: 15.11.2023 AU 2023903672
(71) Applicant: FWS AUS Pty Ltd, 4520 Queensland (AU)
(72) Inventor: FOLEY, Robert, Queensland, 4520 (AU)
(74) Representative: Wynne-Jones IP Limited

(57) **Abstract**

The present invention relates to a pipe cutting assembly and method of use thereof for cutting level vertical pipes. In one form, the pipe cutting assembly includes an adjustable arm including: at least one horizontal guide body movably mountable to and radially extending from a circular guide of the pipe cutting assembly; at least one vertical guide rail slidably mountable to the at least one horizontal guide body and horizontally moveable relative thereto; and a cutting torch mount for mounting a cutting torch, said mount slidably mountable to the at least one vertical guide rail and vertically moveable relative thereto.

## Description

### TECHNICAL FIELD

The present invention relates to a pipe cutting assembly and method of use thereof for cutting vertical pipes level. In particular, the present invention concerns an adjustable arm for use with a pipe cutting assembly.

### BACKGROUND

A pile or piling is a vertical structural element driven or drilled into the ground at a building site to function as a foundation for subsequent construction. The piles may comprise pipe piles (i.e., vertical steel pipes), preformed concrete piles or even timber piles. The piles are typically driven into the ground with a pile driver.

A problem with the process of pile driving is that the piles are often not driven into the ground at a precisely vertical orientation but rather at slight angle relative thereto. In some instances, this angle may be 15° or more relative to the vertical.

Moreover, another problem with the process is that the piles are often partially deformed from the pile driving process, and, in the instance of pipe piles, may no longer have a substantially circular cross-section or may include a slight bend.

To accommodate for the above deficiencies, it is common for pipe piles to be cut level once they have been driven into the ground.

Conventionally, the pipes may be cut level using an oxy pipe cutter with a chain/brace or an angle grinder. However, the applicant has found that such chains/braces are prone to slipping resulting in a non-level cut and the cutting discs of the angle grinders are prone to frequent failure thereby unnecessarily prolonging the cutting process.

Another way of cutting pipe piles level is by using a Sawyer^{™} Quick Set^{™} pipe cutting machine. The machine includes a circular guide fittable about the pile and a cutting torch holder on a pivotable arm relative to the circular guide for controlling a distance between a cutting tip of a cutting torch and the pile and configured to be movable about the pipe pile to cut the pile level. However, the applicant has found that the pivotable arm does not provide sufficient travel relative to the pile to provide a quality cut. Indeed, the applicant has found that the pivotable arm does not position the cutting tip of the cutting torch close enough to the pile when cutting partially deformed piles (i.e., non-circular) or piles that deviate from the vertical.

It will be clearly understood that, if a prior art publication is referred to herein, this reference does not constitute an admission that the publication forms part of the common general knowledge in the art in Australia or in any other country.

### SUMMARY OF INVENTION

Embodiments of the present invention provide a pipe cutting assembly, an adjustable arm for use with pipe cutting assembly and methods of use thereof for cutting vertical pipes level, which may at least partially address one or more of the problems or deficiencies mentioned above or which may provide the public with a useful or commercial choice.

According to a first aspect of the present invention, there is provided an adjustable arm for use with a pipe cutting assembly for cutting vertical pipes level, said arm including:
at least one horizontal guide body movably mountable to and radially extending from a circular guide of the pipe cutting assembly;
at least one vertical guide rail slidably mountable to the at least one horizontal guide body and horizontally movable relative thereto; and
a cutting torch mount for mounting a cutting torch, said mount slidably mountable to the at least one vertical guide rail and vertically movable relative thereto.

According to a second aspect of the present invention, there is provided a pipe cutting assembly for cutting vertical pipes level, said assembly including:
a circular guide fittable and moveable about the vertical pipe, said guide including two or more radially extending adjustable supports for levelling the circular guide relative to the vertical pipe in a spaced relationship therefrom; and
an adjustable arm mountable to the circular guide for movement about the vertical pipe together with the circular guide and adjustably positioning a cutting torch relative to the vertical pipe, said adjustable arm including:
   at least one horizontal guide body extending radially outward from the circular guide;
   at least one vertical guide rail slidably mountable to the at least one horizontal guide body and horizontally moveable relative thereto; and
   a cutting torch mount for mounting a cutting torch, said mount slidably mountable to the at least one vertical guide rail and vertically movable relative thereto.

Advantageously, the cutting assembly of the present invention, particularly the adjustable arm, provide means for precisely controlling a position of the cutting torch relative to a vertical pipe when rotating about an off vertical or slightly deformed vertical pipe. Indeed, the precise translational control provided by the adjustable arm enables the cutting tip of a cutting torch to be maintained in close contact with a sidewall of the pipe and therefore a clean and precise cut to be formed when levelling the pipe. Such control is simply not possible with the prior art due to the limited travel distance of the pivotable arm mount.

As indicated, the adjustable arm and the pipe cutting assembly of the present invention are primarily for use in cutting vertical pipes level, preferably vertical steel pipe piles. It will therefore be convenient to hereinafter describe the adjustable arm and the pipe cutting assembly with reference to this example application. However, a person skilled in the art will appreciate that the adjustable arm and pipe cutting assembly are capable of broader applications and applicable to cutting any type or orientation of pipe.

Generally, the vertical pipe may include any pipe having a pair of opposed ends and at least one sidewall extending longitudinally therebetween. The pair of opposed ends may include a buried lower end and an opposed protruding upper end. The at least one sidewall may be curved such that the pipe has a substantially circular profile shape, although oval or ovular shapes are also encompassed.

The vertical pipe may extend upwardly from the ground substrate in a substantially vertical orientation, although any deviation up to 25° from the vertical is also encompassed, preferably up to 15°.

The vertical may preferably be formed from metal material or materials, preferably steel, although plastic material or materials, such as, e.g., PVC, are also encompassed.

As indicated, the pipe cutting assembly includes a circular guide fittable about the vertical pipe and for guiding the adjustable arm including the cutting torch about the vertical pipe.

The circular guide may be of any size, shape and construction suitably adapted to be fitted about a vertical pipe. Typically, the circular guide may include one or more bands of metal each in the form of an extended arc. The circular guide may be of unitary construction or may be formed from two or more guide pieces.

In some embodiments, the circular guide may include a pair of arcuate members and an articulation pivotally coupling the arcuate members together. The arcuate members may be pivotable relative to each other and about the articulation between an open position in which the guide may be fitted about a circumference of a vertical pipe and an operable position in which the arcuate members align to form a complete circular band.

Each arcuate member may include an outer end and a coupling end coupled to the articulation. The outer ends may include a fastening mechanism or part thereof for fastening the outer ends together when in the operable position.

In other embodiments, the circular guide may include a circular band configured to be fitted over the protruding upper end of the vertical pipe.

The circular band may include a pair of opposed surfaces interconnected by opposing side edges.

The opposed surfaces may include an upper surface and an opposed lower surface. The opposed surfaces may extend substantially parallel to each other.

The opposing side edges may include an inner edge or circumference and an opposed outer edge or circumference.

In some embodiments, the circular guide may further include a fastening clamp for fastening the circular guide at a desired height along a height of the vertical pipe. The fastening clamp may be of any suitable size, shape and construction. The circular guide may preferably be moveable relative to the fastening clamp for rotation about the vertical pipe.

In some such embodiments, the fastening clamp may include an arcuate member slidably mounted or coupled to an inner edge portion of the circular guide for positioning against the sidewall of the vertical pipe and a fastening strap or chain coupled at a first end of the arcuate member and configured to extend about the vertical pipe and be fastened to an opposed second end of the arcuate member, preferably under tension.

The arcuate member may include a pair of opposed ends and an arcuate body extending between the opposed ends. The opposed ends may include the first end and the opposed second end. The arcuate member may include a pair of opposed sides. The opposed sides may include an outer edge slidably mounted or coupled to the circular guide and an opposed inner edge for positioning against the sidewall of the vertical pipe, preferably via the two or more radially extending adjustable supports.

The fastening strap or chain may include a pair of opposed ends, including a coupled end connected to the first end of the arcuate member and a distal outer end configured to be fastened to the opposed second of the arcuate member.

The distal outer end of the fastening strap or chain may include a latch clamp for fastening the distal end of the fastening strap or chain to the second end under tension. Typically, the latch clamp may be connected, or coupled, to the distal end of the fastening strap or chain via a spring to facilitate the application of tension about the vertical pipe, preferably an extension or tension spring.

As indicated, the circular guide includes two or more radially extending adjustable supports for levelling the circular guide relative to the vertical pipe in a spaced relationship therefrom. The adjustable supports may be of any suitable size, shape and construction.

In some embodiments, the supports may each include an adjustment screw extending radially through a threaded bore in the arcuate member.

Each adjustment screw may include a distal end configured to engage with the sidewall of the vertical pipe, an opposed head and a threaded shank extending therebetween.

The threaded shank may include an external thread extending at least partially along a length of the threaded shank.

The head may include an enlarged head or knob or the like to assist in manual rotation of the adjustment screw by an operator when levelling the circular guide relative to the vertical pipe.

The threaded bore may extend between and through the opposed sides of the arcuate member in a radial orientation extending from the vertical pipe.

The threaded bore may include an internal thread extending at least partially along a length of the bore.

The threaded bore and the threaded shank of the adjustment screw may preferably threadingly engage with each other.

In other preferred embodiments, the supports may include a pair of mounts pivotally coupled to the arcuate member, preferably at each of the opposed ends, more preferably pivotally coupled to an upper surface of the arcuate member at each of the opposed ends.

Each mount may be pivotable about a vertical axis inwards and outwards relative to the arcuate member for radial adjustment relative to the vertical pipe.

Each mount may include a threaded bore as previously described extending through the mount for receiving the adjustment screw as previously described therethrough.

Each mount may include an elongate slot for receiving a mechanical fastener therethrough and into the arcuate member for fixing a pivot angle of the mount relative to the arcuate member and therefore a radial position of the mount relative to the vertical pipe.

Typically, the mechanical fastener may include a head and/or a washer and may extend into a preformed bore defined in an upper surface of the arcuate member.

In preferred embodiments, the fastening strap or chain may be coupled to one of the mounts at a first end of the arcuate member and the distal end of the fastening strap or chain may be configured to be coupled to the other of the mounts at the second end of the arcuate member, preferably under tension via the toggle clamp and tension spring.

As indicated, the circular guide may be moveable about the vertical pipe and relative to the fastening clamp, preferably slidable in a circular motion about the vertical pipe.

The circular guide and the arcuate member of the fastening clamp may be slidably coupled in any suitable so as to enable free movement of the circular guide relative to the arcuate member.

For example, in some embodiments the outer edge of the arcuate member may include an elongate slot or channel for slidably receiving part of an inner edge of the circular guide for movement therethrough.

The elongate slot or channel may longitudinally extend between the opposed ends of an outer edge of the arcuate member.

The elongate slot or channel may include one or more wheels, rollers, plain bearing pads or the like to facilitate movement of the circular guide relative thereto.

The elongate slot or channel may be sized and shaped for guiding passage of a part or portion of the circular guide therethrough.

In some embodiments, the circular guide may be moved about the vertical pipe by hand.

In other embodiments, the assembly may further include a drive mechanism for driving movement of the circular guide about the vertical pipe and relative to the fastening clamp. Any suitable drive mechanism may be used.

In some embodiments, the drive mechanism may include a drive sprocket mounted on the arcuate member and configured to engage with the circular guide for moving the guide relative to the arcuate member and about the vertical pipe. The drive sprocket may be operated by hand or drive by a motor, such as, e.g., an electric motor.

In other embodiments, the drive mechanism may include a drive sprocket mounted to the arcuate member and configured to intermesh with a gear, track or rack defined on the circulate guide, preferably the outer edge of the circular guide.

In preferred embodiments, the drive mechanism may include a rack-and-pinion mechanism. The rack-and-pinion mechanism may include a pinon mounted to the arcuate member and configured to intermesh with an arcuate rack defined or mounted on an outer edge of the circular guide. The pinion may include a crank arm and handle for manual rotation of the pinion and thus movement of the circular guide about the vertical pipe and relative to the fastening clamp.

As indicated, the assembly includes an adjustable arm mountable to the circular guide for movement about the vertical pipe and adjustably positioning a cutting torch relative to the vertical pipe.

The adjustable arm may include at least one horizontal guide body, at least one vertical guide rail slidably mountable to the horizontal guide body and horizontally moveable relative thereto and a cutting torch mount slidably mountable to the at least one vertical guide rail and vertically moveable relative thereto.

In use, horizontal movement of the at least one vertical guide rail relative to the at least one horizontal guide body may advantageously enable translational adjustment of the cutting tip of a cutting torch relative to the vertical pipe.

Similarly, vertical movement of the cutting torch mount relative to the at least one vertical guide rail may advantageously enable height adjustment of a cutting tip of a cutting torch relative to the vertical pipe.

The at least one horizontal guide body may be of any suitable size, shape and construction, preferably solid construction. The guide body may be unitary construction or may be formed from two or more body pieces joined together.

The guide body may preferably be formed from metal.

The guide body may be a plate, a cube, a triangular prism, a rectangular prism, a pentagonal prism, a hexagonal prism, an octagonal prism or generally of a polyhedron shape.

Typically, the at least one horizontal guide body may have a rectangular prism shape. The body may be defined by a top wall, an opposed base wall, a pair of opposed end walls and a pair of opposed sidewalls.

The top wall, the base wall and the pair of opposed sidewalls may extend longitudinally between the opposed ends walls.

The opposed ends may include an inner end and an opposed outer end.

The at least one horizontal guide body may be mountable to the circular guide such that it extends radially outward from the circular guide.

The at least one horizontal guide body and the circular guide may be mountable together in any suitable way, preferably fixedly.

For example, one of the top wall and the base wall of the guide body may be fastened against one of the lower surface and upper surface of the circular guide with one or more mechanical fasteners.

Preferably, the at least one horizontal guide body and the circular guide may be fastened together in a surface-to-surface arrangement in which a portion of the top wall at or near the inner end is fastened against a portion of the lower surface of the circular guide at or near the outer edge with one or more mechanical fasteners.

The at least one vertical guide rail may be of any suitable size, shape and construction, preferably solid construction. The at least one vertical may be unitary construction or may be formed from two or more rail pieces joined together.

The rail may preferably be formed from metal.

The at least one vertical guide rail may include a pair of opposed ends and an elongate body extending longitudinally therebetween, preferably in vertical orientation extending down from the horizontal guide body.

The pair of opposed ends may include an upper end slidably coupled to the horizontal guide body and an opposed lower end.

The elongate body may be defined by at least one sidewall. The at least one sidewall may be planar, curved or rounded.

The body may have any suitable cross-sectional shape. For example, the body may have a circular, oval-shaped, triangular or rectangular cross-sectional shape, preferably a rectangular cross-sectional shape defined by four sidewalls. The four sidewalls may include an inner wall facing the vertical pipe, an opposed outer wall, and opposed sidewalls.

The horizontal guide body and the at least one vertical guide rail may be slidably mounted together in any suitable way such that the at least one vertical guide rail may be horizontally movable towards and away from the vertical pipe for translational adjustment of the cutting torch.

In some embodiments, the at least one vertical guide rail may be slidably mounted to the horizontal guide body by a connecting mechanism or part thereof. For example, a first part of the connecting mechanism associated with the at least one rail may mate or engage with a second part of the connecting mechanism associated with the at least one horizontal guide body.

The connecting mechanism may include mateable male and female portions that couple together.

In some embodiments, the horizontal guide body may include a one or more elongate guide channels extending at least partially along its longitudinal axis between the opposed ends and the at least one vertical guide rail may include one or more corresponding mounting portions configured to be received in the one or more elongate guide channels and be slidable therealong. The one or more mounting portions may each include an enlarged head or other type of retaining member configured to engage with and be retained in the elongate guide channels, preferably in a slidable arrangement.

The one or more guide channels may be defined on any one of the base wall and the opposed sidewalls, preferably the base wall and at least one of the opposed sidewalls.

The mounting portions may be of any suitable size, shape and form and may be movably coupled to the elongate guide channels in any suitable way to be horizontally slidable therealong.

The horizontal guide body may preferably include an actuating mechanism for moving the at least one vertical guide rail horizontally relative to the horizontal guide body.

Any suitable type of actuating mechanism may be used. The actuating mechanism may be manually actuated or by using a drive, preferably the former. Movement may be linear, although non-linear movement, such as, e.g., rotary movement, may also be envisaged.

In some embodiments, the actuating mechanism may include a threaded shaft rotatably coupled to the horizontal guide body and upon which the at least one vertical guide rail may be mounted for movement therealong by rotation of the threaded shaft.

The threaded shaft may include an inner end rotatably coupled to the horizontal guide body at or near the inner end of the body, an opposed head and the threaded shaft extending therebetween.

The threaded shaft may include an external thread extending at least partially along a length of the shaft.

The head may include an enlarged head or knob or the like to assist in manual rotation of the threaded shaft by an operator when adjusting a translational position of the cutting torch relative to the vertical pipe.

The upper end of the vertical guide rail may include a threaded bore for mounting to the threaded shaft. The threaded bore may extend between and through the inner and outer walls of the elongate body of the vertical guide rail at or near the upper end.

The threaded bore may include an internal thread extending at least partially along a length of the bore.

The threaded bore and the threaded shaft may preferably threadingly engage with each other.

The cutting torch mount may be of any suitable size, shape and construction to hold the cutting torch and be slidably mountable to the at least one vertical guide rail for vertical movement therealong. The cutting torch mount may of unitary construction or may be formed from two or more mount pieces joined together, preferably the latter.

The cutting torch mount may preferably be formed from metal.

The cutting torch mount may include a pair of opposed plate members configured to be clamped together about the elongate body of the at least one vertical guide rail for movement therealong.

The opposed plate members may include an inner plate member and an outer plate member configured to be sandwiched about the at least one vertical guide rail.

The plate members may have any suitable shape. For example, the plate members may have a circular, oval-shaped, triangular or rectangular shape, preferably a rectangular shape.

The inner plate member may include an inner surface and an opposed abutment surface interconnected by opposing edges.

The outer plate member may include an outer surface and an opposed abutment surface interconnected by opposing edges.

The respective abutment surfaces of the inner and outer plate members may be fastened together in a surface-to-surface arrangement with one or more mechanical fasteners.

The opposing edges may include a lower edge, an opposed upper edge and opposed side edges.

Both the inner and outer plate members may each define a central aperture through which the cutting torch is mounted when the plate members are fastened together. The cutting torch may be mounted to the plate members in any suitable way, preferably releasably.

In some embodiments, the cutting torch may be mounted to the plate members by cutting torch clamp or the like extending from one of the inner and outer plate members into the central aperture, preferably the outer plate member.

In some embodiments, the cutting torch clamp may be adjustably mounted to one of the outer plate members so that a vertical angle of the cutting torch relative to the cutting torch mount may be adjusted, preferably in a vertical plane.

In some such embodiments, the outer plate member may include a cutting torch clamp mounting bracket extending perpendicularly from the outer surface in a vertical orientation and having an arcuate-shaped channel defined therein. The cutting torch clamp may be mounted to the cutting torch clamp mounting bracket by a mechanical fastener received through the arcuate-shaped channel and into a threaded bore defined in a portion of the cutting torch clamp.

The mechanical fastener may include a distal end, a head and a threaded shank extending therebetween.

The threaded shank may include an external thread extending at least partially along a length of the threaded shank.

The head may include an enlarged head or knob or the like to assist in manual rotation of the mechanical fastener by an operator when adjusting the angle of the cutting torch relative to the cutting torch mount.

The threaded bore may include an internal thread configured to threadingly engage with the external thread defined on the threaded shank of the mechanical fastener.

The cutting torch mount may be slidably mountable to the at least one vertical guide rail in any suitable way.

Generally, each of the inner and outer plate members may define a channel extending longitudinally between the upper and lower edges for fitting about the at least one vertical guide rail when fastened together. The channels may join together to define a through passage through which the at least one vertical guide rail extends. The cutting torch mount may be slidable on the elongate body of the at least one vertical guide rail between the upper end and the lower end.

In some embodiments, the at least one vertical guide rail may include an actuating mechanism for moving the cutting torch mount therealong. Any suitable actuating mechanism may be used as previously described.

In other embodiments, the at least one vertical guide rail may be manually moved along the at least one vertical guide rail.

In some such embodiments, the cutting torch mount may further include one or more fixing screws for fixing the cutting torch mount in a desired position along a height of the at least one vertical guide rail.

The one or more fixing screw may be received through one or more threaded bores defined and extending through the inner plate adjacent the channel defined therein for clamping or fixing against the at least one vertical guide rail received therein.

Each fixing screw may include a distal end configured to engage with or clamp against an outer wall of the elongate body of the at least one vertical guide rail, an opposed head and a threaded shank extending therebetween.

The threaded shank may include an external thread extending at least partially along a length of the threaded shank.

The head may include an enlarged head or knob or the like to assist in manual rotation of the fixing screw by an operator when fixing the cutting torch mount relative to the at least one vertical guide rail.

The one or more threaded bores may be defined in and extend through the opposed surfaces of the outer plate member and the channel defined therein.

Each of the one or more threaded bores may include an internal thread configured to threadingly engage with the external thread defined on the threaded shank of the one or more fixing screws.

According to a third aspect of the present invention, there is provided a method of cutting a vertical pipe level, said method including:
providing a pipe cutting assembly according to the second aspect;
levelling a circular guide of the cutting assembly relative to the vertical pipe; and
adjusting a position of the cutting torch relative to the vertical pipe with an adjustable arm of the assembly while contemporaneously moving the circular guide together with the cutting torch about the vertical pipe.

The method may include one or more features or characteristics of the pipe cutting assembly, including the adjustable arm, as hereinbefore described.

The levelling may include adjusting the two or more radially extending adjustable supports until the circular guide is level. The adjusting may include tightening and/or loosening the respective adjustment screws operatively associated with each of the pair of mounts pivotally coupled to the arcuate member of the fastening clamp.

The adjusting the two or more radially extending adjustable supports may further include periodically checking the circular guide with a spirit level.

The adjusting a position of the cutting torch may include adjusting a translational position of the cutting tip of the cutting torch relative to the vertical pipe while contemporaneously moving the circular guide and the mounted cutting torch about the vertical pipe.

The adjusting the translational position may include tightening and loosening the threaded shaft of the actuating mechanism of the at least one horizontal guide body of the adjustable arm.

In use, the cutting tip of the cutting torch is desirably maintained a consistently close distance from the sidewall of the vertical pipe while being rotated about the vertical pipe by the circular guide.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

### BRIEF DESCRIPTION OF DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of Invention in any way. The Detailed Description will make reference to a number of drawings as follows:
Figure 1 is a photograph showing a pipe cutting assembly, including an adjustable arm, according to an embodiment of the present invention fitted about a vertical pipe for cutting the vertical pipe level;
Figure 2 is a photograph showing an upper perspective view of the adjustable arm as shown in Figure 1; and
Figure 3 is a photograph showing a magnified image of part of the adjustable arm as shown in Figures 1 and 2.

### DETAILED DESCRIPTION

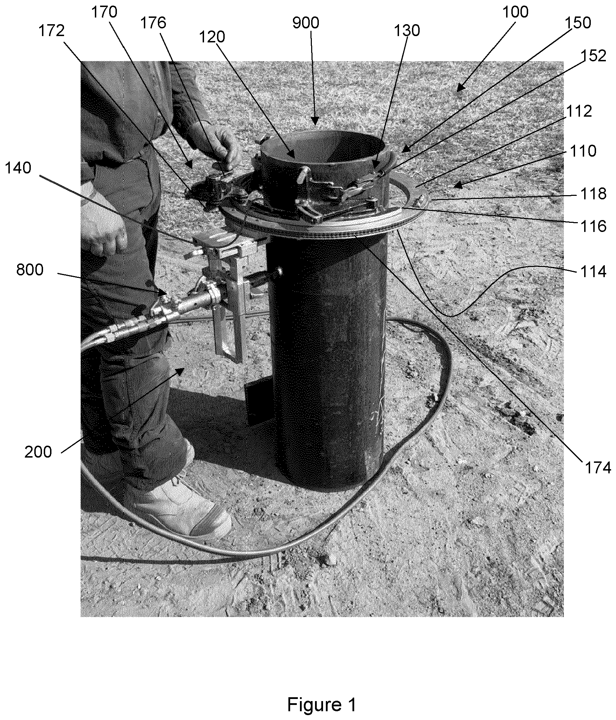

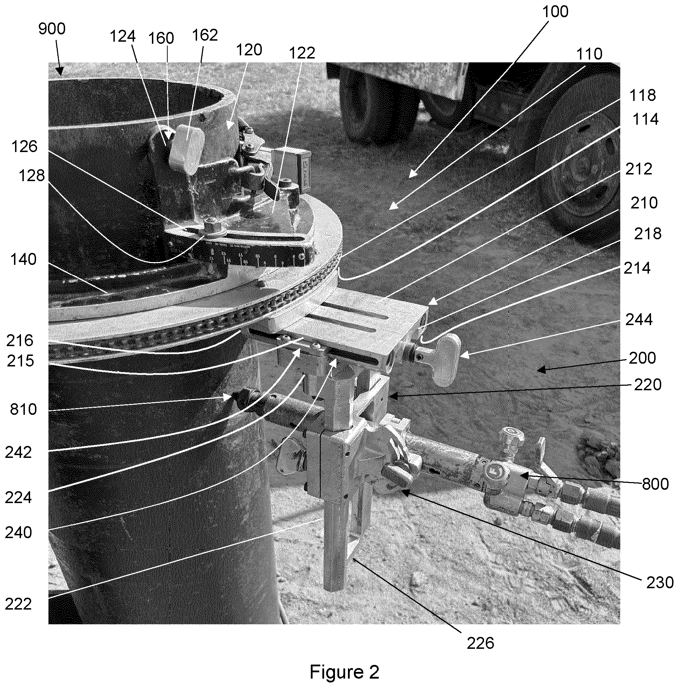

Figures 1 to 3 show a pipe cutting assembly (100; shown in Figures 1 and 2 only) including an adjustable arm (200) and parts thereof according to an embodiment of the present invention for cutting a steel vertical pipe (900; shown in Figures 1 and 2 only) level.

Referring to Figure 1, the pipe cutting assembly (100) includes: a circular guide (110) fittable and moveable about the steel vertical pipe (900), the guide (110) including two radially extending adjustable supports (120) for levelling the circular guide (110) relative to the steel vertical pipe (900) in a spaced relationship therefrom; and the adjustable arm (200) mountable to the circular guide (110) for movement about the steel vertical pipe (900) together with the circular guide (110) and adjustably positioning a cutting torch (800) relative to the vertical pipe (900).

The circular guide (110) includes a circular band configured to be fitted over a protruding upper end of the steel vertical pipe (900).

The band includes a pair of opposed surfaces interconnected by opposing side edges. The opposed surfaces include an upper surface (112) and an opposed lower surface (114) extending substantially parallel to each other. The opposing side edges include an inner edge (116) and an opposed outer edge (118).

The circular guide (110) includes a fastening clamp (130) for fastening the circular guide (110) at a desired height along the steel vertical pipe (900) such that the circular guide (110) is moveable relative to the fastening clamp (130) for rotation about the pipe (900).

The fastening clamp (130) includes an arcuate member (140) slidably mounted or coupled to an inner edge portion of the circular guide (110) for positioning against a sidewall of the pipe (900) and a fastening chain (150) coupled to a first end of the arcuate member (140) and configured to extend about the vertical pipe (900) and be fastened under tension to an opposed second end of the arcuate member (140).

The arcuate member (140) is positioned against the sidewall of the vertical pipe (900) via the two radially extending adjustable supports (120).

The fastening chain (150) includes a pair of opposed ends, including a coupled end connected to the first end of the arcuate member (140) and a distal outer end configured to be fastened to the opposed second of the arcuate member (140).

The distal outer end of the fastening chain (150) includes a latch clamp connected to the distal end via a tension spring (152) for fastening the fastening chain under tension about the steel vertical pipe (900).

Referring to Figure 2, and as indicated, the two radially extending adjustable supports (120) are for levelling the circular guide (110) relative to the vertical pipe (900) in a spaced relationship therefrom.

Each support (120) includes a mount (122) pivotally coupled to an upper surface of the arcuate member (140) at or near an end of the arcuate member (140).

Each mount (122) is pivotable about a vertical axis inwards and outwards relative to the arcuate member (140) for radial adjustment relative to the vertical pipe (900).

Each mount (122) includes a threaded bore (124) extending through the mount (122) for threadingly receiving an adjustment screw (160) therethrough. The threaded bore (124) includes an internal thread extending at least partially along a length of the bore (124).

The adjustment screw (160) includes a distal end configured to engage with the sidewall of the vertical pipe (900), an opposed head (162) and a threaded shank extending therebetween.

The threaded shank includes an external thread extending at least partially along a length of the threaded shank.

The head (162) includes an enlarged head or knob or the like to assist in manual rotation of the adjustment screw (160) by an operator when levelling the circular guide (110) relative to the vertical pipe (900).

Each mount (122) further includes an elongate slot (126) for receiving a mechanical fastener (128) therethrough and into the arcuate member (140) for fixing a pivot angle of the mount (122) relative to the arcuate member (140) and therefore a radial position of the mount (122) relative to the vertical pipe (900).

Referring back to Figure 1, and as indicated, the circular guide (110) is slidable in a circular motion about the vertical pipe (900) and relative to the fastening clamp (130).

The circular guide (110) is slidably coupled to the arcuate member (140) of the fastening clamp (130) so as to enable free movement of the circular guide (110) relative to the arcuate member (140).

The assembly (110) further includes a drive mechanism (170) for driving movement of the circular guide (110) about the vertical pipe (900) and relative to the fastening clamp (130).

The drive mechanism (170) includes a rack-and-pinion mechanism including a pinon (172) mounted to the arcuate member (140) and configured to intermesh with an arcuate rack (174) mounted on an outer edge (118) of the circular guide (110). The pinion (172) includes a crank arm and handle (176) for manual rotation of the pinion (172) and thus movement of the circular guide (110) about the vertical pipe (900) and relative to the fastening clamp (130).

Referring to Figure 2 again, the adjustable arm (200) is mountable to the circular guide (110) for movement about the vertical pipe (900) and adjustably positioning the cutting torch (800) relative to the vertical pipe (900).

The adjustable arm (200) includes a horizontal guide body (210; i.e., at least one horizontal guide body), a vertical guide rail (220; i.e., at least vertical guide rail) slidably mountable to the horizontal guide body (210) and horizontally moveable relative thereto and a cutting torch mount (230) slidably mountable to the vertical guide rail (220) and vertically moveable relative thereto.

In use, horizontal movement of the vertical guide rail (220) relative to the horizontal guide body (210) advantageously enables translational adjustment of a cutting tip (810) of the cutting torch (800) relative to the vertical pipe (900).

Similarly, vertical movement of the cutting torch mount (230) relative to the vertical guide rail (220) advantageously enables height adjustment of the cutting tip (810) of the cutting torch (800) relative to the vertical pipe (900).

The horizontal guide body (210) has a rectangular prism shape and is formed from metal.

The body (210) is defined by a top wall (212), an opposed base wall (214), a pair of opposed end walls and a pair of opposed sidewalls (215).

The top wall (212), the base wall (214) and the pair of opposed sidewalls (215) extend longitudinally between the opposed ends walls.

The opposed ends may include an inner end (216) and an opposed outer end (218).

The horizontal guide body (210) is mountable to the circular guide (110) such that it extends radially outward from the circular guide (110). Specifically, the horizontal guide body (210) and the circular guide (110) are fastened together in a surface-to-surface arrangement in which a portion of the top wall (212) at or near the inner end (216) is fastened against a portion of the lower surface (114) of the circular guide (110) at or near the outer edge (118) with mechanical fasteners.

The vertical guide rail (220) includes a pair of opposed ends and an elongate body (222) defined by two outer frame members extending longitudinally therebetween. Like the horizontal guide body (210), the vertical guide rail (220) is also formed of metal.

The opposed ends include an upper end (224) slidably coupled to the horizontal guide body (210) and an opposed lower end (226).

As indicated, the vertical guide rail (220) is slidably mounted to the horizontal guide body (210) such that the vertical guide rail (220) is horizontally movable towards and away from the vertical pipe (900) for translational adjustment of the cutting torch (800).

As shown, the horizontal guide body (210) includes three elongate guide channels (240) extending at least partially along its longitudinal axis between the opposed ends and the vertical guide rail (220) includes three corresponding mounting portions (242) configured to be respectively received in the elongate guide channels (240) and be slidable therealong.

The guide channels (240) are defined on the base wall (214) and the opposed sidewalls (215).

The horizontal guide body (210) further includes an actuating mechanism for moving the vertical guide rail (220) horizontally relative to the horizontal guide body (210).

The actuating mechanism includes a threaded shaft rotatably coupled to the horizontal guide body (210) and upon which the vertical guide rail (220) is threadingly mounted for movement therealong by rotation of the threaded shaft.

The threaded shaft includes an inner end rotatably coupled to the horizontal guide body (210) at or near the inner end (216) of the body (210), an opposed head (244) and the threaded shaft extending therebetween.

The threaded shaft includes an external thread extending at least partially along a length of the shaft.

The head (244) includes an enlarged head or knob or the like to assist in manual rotation of the threaded shaft by an operator when adjusting a translational position of the cutting torch (800) relative to the vertical pipe (900).

The upper end (224) of the vertical guide rail (220) includes a threaded bore for mounting to the threaded shaft. The threaded bore extend between and through the inner and outer walls of the elongate body (222) of the vertical guide rail (220) at or near the upper end (224).

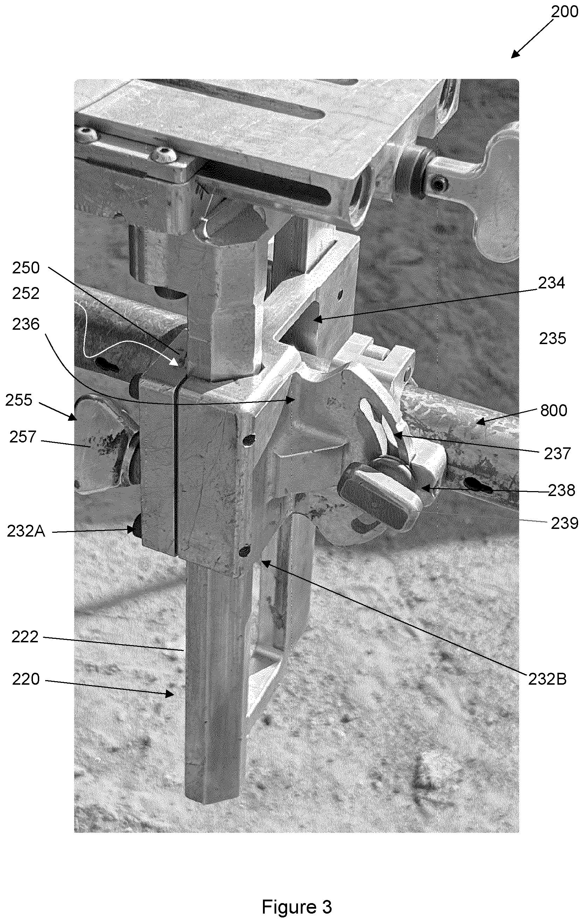

Referring to Figure 3, the cutting torch mount (230) is formed from a pair of opposed plate members (232) sandwiched together about the two outer frame members of the elongate body (222) of the vertical guide rail (220) for vertical movement therealong. Like the horizontal guide body (210) and the vertical guide rail (220), the cutting torch mount (230) is formed from metal.

The opposed plate members (232) include an inner plate member (232A) and an outer plate member (232B). The plate members (232) have a rectangular shape and connected together in a surface-to-surface arrangement with one or more mechanical fasteners.

Both the inner and outer plate members (232A, 232B) define a central aperture (234) through which the cutting torch (800) is mounted when the plate members (232) are fastened together.

The cutting torch (800) is mounted indirectly to an outer surface of the outer plate member (232B) via cutting torch clamp (235) mounted to a cutting torch clamp mounting bracket (236) extending perpendicularly from the outer surface in a vertical orientation and having an arcuate shaped channel (237) defined therein for adjusting a vertical angle of the cutting torch (800) relative to the cutting torch mount (230).

The cutting torch clamp (235) is mounted to the cutting torch clamp mounting bracket (236) by a mechanical fastener (238) received through the arcuate shaped channel (237) and into a threaded bore defined in a portion of the cutting torch clamp (235).

The mechanical fastener (238) includes a distal end, a head (239) and a threaded shank extending therebetween.

The head (239) includes an enlarged head or knob or the like to assist in manual rotation of the mechanical fastener (238) by an operator when adjusting the vertical angle of the cutting torch (800) relative to the cutting torch mount (230).

As indicated, the cutting torch mount (230) is slidably mountable to vertical guide rail (220) for height adjustment of the cutting torch (800).

Each of the inner and outer plate members (232A, 232B) define channels (250) extending longitudinally between the upper and lower edges of the plate members (232) for fitting about the two outer frame members of the elongate body (222) of the vertical guide rail (220). The corresponding channels (250) on the plate members (232) join together when the plate members (232) are joined to define a through passage (252) through which the outer frame members of the elongate body (222) of the vertical guide rail (220) extend.

The cutting torch mount (230) is manually movable along the vertical guide rail (220).

However, the cutting torch mount (230) further includes two fixing screws (255) for fixing the cutting torch mount (230) in a desired position along a height of the vertical guide rail (220).

The fixing screws (255) are received through threaded bores defined and extending through the inner plate (232A) over the channels (250) defined therein for clamping or fixing against the outer frame members of the elongate body (222) of the vertical guide rail (220).

Each fixing screw (255) includes a distal end configured to engage with or clamp against the outer frame member of the elongate body (222) of the at least one vertical guide rail (220), an opposed head (257) and a threaded shank extending therebetween.

The head (257) includes an enlarged head or knob or the like to assist in manual rotation of the fixing screw (255) by an operator when fixing the cutting torch mount (230) relative to the vertical guide rail (220).

In the present specification and claims (if any), the word *'comprising'* and its derivatives including *'comprises'* and *'comprise'* include each of the stated integers but does not exclude the inclusion of one or more further integers.

Reference throughout this specification to '*one embodiment'* or *'an embodiment'* means that a particular feature, structure, or characteristic described in connection with the embodiment is included in at least one embodiment of the present invention. Thus, the appearance of the phrases *'in one embodiment'* or *'in an embodiment'* in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

## Claims

1. An adjustable arm (200) for use with a pipe cutting assembly (100) for cutting vertical pipes (900) level, said arm (200) including:
at least one horizontal guide body (210) movably mountable to and radially extending from a circular guide (110) of the pipe cutting assembly (100);
at least one vertical guide rail (220) slidably mountable to the at least one horizontal guide body (210) and horizontally movable relative thereto;
an actuating mechanism for moving the at least one vertical guide rail (220) horizontally relative to the at least one horizontal guide body (210), said actuating mechanism including a threaded shaft rotatably coupled to the horizontal guide body (210) and upon which the at least one vertical guide rail (220) is mounted for movement therealong by rotation of the threaded shaft; and
a cutting torch mount (230) for mounting a cutting torch (800), said mount (230) slidably mountable to the at least one vertical guide rail (220) and vertically movable relative thereto.

2. The adjustable arm (200) of claim 1, wherein horizontal movement of the at least one vertical guide rail (220) relative to the at least one horizontal guide body (210) enables translational adjustment of a cutting tip of the cutting torch (800) relative to a vertical pipe (900).

3. The adjustable arm (200) of claim 1 or claim 2, wherein vertical movement of the cutting torch mount (230) relative to the at least one vertical guide rail (220) enables height adjustment of a cutting tip of the cutting torch (800) relative to a vertical pipe (900).

4. The adjustable arm (200) of any one of claims 1 to 3, wherein the at least one horizontal guide body (210) has a rectangular prism shape and is mountable to the circular guide (110) such that the body (210) extends radially outwards from the circular guide (110).

5. The adjustable arm (200) of any one of claims 1 to 4, wherein the at least one horizontal guide body (210) is fixedly mounted to the circular guide (110) such that the at least one horizontal guide body (210) moves together with the circular guide (110) about a vertical pipe (900).

6. The adjustable arm (200) of claim 4, wherein the at least one horizontal guide body (210) includes an inner end (216) and an opposed outer end (218) and one or more elongate guide channels (240) extending longitudinally between the inner end (216) and the outer end (218) for slidably mounting the at least one vertical rail (220) thereto.

7. The adjustable arm (200) of claim 6, wherein the at least one vertical guide rail (220) includes an upper end (224), an opposed lower end (226) and an elongate body (222) extending longitudinally therebetween, the upper end (224) including one or more mounting portions configured to be received in the one or more elongate guide channels (240) of the at least one horizontal guide body (210) and be slidable therealong.

8. The adjustable arm (200) of any one of claims 1 to 7, wherein the cutting torch mount (230) is formed from an inner plate member (232A) and an outer plate member (232B) clamped about the at least one vertical guide rail (220) for vertical movement therealong.

9. The adjustable arm (200) of claim 8, wherein the inner and outer plate members (232A, 232B) each define a central aperture (234) through which the cutting torch (800) is mounted.

10. The adjustable arm (200) of claim 9, wherein the cutting torch mount (230) further includes a cutting torch clamp (235) for mounting the cutting torch (800) to one of the inner and outer plate members (232A, 232B).

11. A pipe cutting assembly (100) for cutting vertical pipes (900) level, said assembly (100) including:
a circular guide (110) fittable and moveable about the vertical pipe (900), said guide (110) including two or more radially extending adjustable supports (120) for levelling the circular guide (110) relative to the vertical pipe (900) in a spaced relationship therefrom; and
an adjustable arm (200) mountable to the circular guide (110) for movement about the vertical pipe (900) together with the circular guide (110) and adjustably positioning a cutting torch relative to the vertical pipe (900), said adjustable arm (200) including:
at least one horizontal guide body (210) extending radially outward from the circular guide (110);
at least one vertical guide rail (220) slidably mountable to the at least one horizontal guide body (210) and horizontally moveable relative thereto;
an actuating mechanism for moving the at least one vertical guide rail (220) horizontally relative to the at least one horizontal guide body (210), said actuating mechanism including a threaded shaft rotatably coupled to the horizontal guide body (210) and upon which the at least one vertical guide rail (210) is mounted for movement therealong by rotation of the threaded shaft; and
a cutting torch mount (230) for mounting a cutting torch (800), said mount (230) slidably mountable to the at least one vertical guide rail (220) and vertically movable relative thereto.

12. The pipe cutting assembly (100) of claim 11, further including a fastening clamp (130) for fastening the circular guide (110) at a desired height along the vertical pipe (900).

13. The pipe cutting assembly (100) of claim 12, further including a drive mechanism (170) for driving movement of the circular guide (110) about the vertical pipe (900) relative to the fastening clamp (130).

14. A method of cutting a vertical pipe (900) level, said method including:
providing a pipe cutting assembly (100) according to any one of claims 11 to 13;
levelling a circular guide (110) of the cutting assembly (100) relative to the vertical pipe (900); and
adjusting a position of the cutting torch (800) relative to the vertical pipe (900) with an adjustable arm (200) of the assembly (100) while contemporaneously moving the circular guide (110) together with the cutting torch about the vertical pipe (900).

15. The method of claim 14, wherein the adjusting includes adjusting a translational position of a cutting tip of the cutting torch (800) by tightening or loosening the threaded shaft of the actuating mechanism of the at least one horizontal guide body (210) of the adjustable arm (200).
